# EUROPEAN PATENT SPECIFICATION

(11) **EP 3 317 083 B1**
(45) Date of publication and mention of the grant of the patent: **15.05.2019**
(21) Application number: 17709174.1
(22) Date of filing: 20.01.2017
(51) Int. Cl.: B29C 64/35

(54) **A MODELLING HEAD FOR A THREE-DIMENSIONAL PRINTING MACHINE**
MODELLIERUNGSKOPF FÜR EINE MASCHINE ZUM DREIDIMENSIONALEN DRUCKEN
TÊTE DE MODELAGE POUR UNE MACHINE D'IMPRESSION EN TROIS DIMENSIONS

(30) Priority: 22.01.2016 IT UB20160209
(43) Date of publication of application: 09.05.2018
(73) Proprietor: Sisma S.p.A., 36013 Piovene Rocchette (Vicenza) (IT)
(72) Inventor: GAMBA, Guido, 36013 Piovene Rocchette (Vicenza) (IT); BAZZUCCO, Fabiano, 36013 Piovene Rocchette (Vicenza) (IT)
(74) Representative: Lissandrini, Marco
(86) International application number: PCT/IB2017/050301
(87) International publication number: WO 2017/125883

(56) References cited:
- EP-A2- 2 523 801
- US-A1- 2005 275 129

## Description

The present invention relates to a modelling head for a three-dimensional printing machine.

In more detail, the present invention falls within the technical sector of three-dimensional printing - so-called "3D printing" - which, as is known, is a technique that allows three-dimensional objects to be produced, by solidifying and superimposing a plurality of layers obtained starting from a liquid resin, susceptible to solidification under the action of an external stimulation.

The three-dimensional printing technique can be specifically and effectively used in the realisation of prototypes for various types of industries, from the plastic to the goldsmith sector.

In accordance with the state of the art, a three-dimensional printing machine comprises a vat for containing the liquid resin and a modelling head equipped with a work surface, generally flat, adapted to support the solidified layers of the three-dimensional object to be produced. Furthermore, there is a resin stimulating device comprising a light source, typically a laser emitter, able to selectively irradiate the layer of liquid resin adjacent to the bottom of the vat, so as to solidify it. In more detail, each layer of the object is obtained by selectively stimulating the resin so as to solidify it in the points that compose a corresponding section of the object to be produced.

In accordance with a first known technique, the light source is positioned below the vat, whose bottom is appropriately transparent to the light radiation emitted by the source. In this case, the stereolithography process first of all requires the modelling head to be positioned at a distance, from the bottom of the vat, equal to the thickness of the layer to be solidified. Subsequently, the light source selectively irradiates the layer of liquid resin adjacent to the bottom of the vat, so as to solidify it. In more detail, the modelling head is configured so that the solidified layer adheres to it while, on the contrary, the bottom of the vat has a coating that reduces such adhesion. For the formation of each subsequent layer, the modelling head is moved away from the bottom of the vat, so as to make the solidified layer emerge and thus allow the necessary thickness of the liquid resin to be restored for the processing of a subsequent layer. Following this, the modelling head brings the object back into a position such that the last solidified layer is at a distance, from the bottom of the vat, equal to the thickness of the new layer to be solidified, so that the new layer solidifies adherent to the previous layer. In accordance with this first known technique, the work surface on which the object is formed faces downwards and the modelling head is, therefore, gradually raised and moved away from the vat.

In accordance with a second known technique, the light source is positioned above the vat. Therefore, instead of stimulating the layer of resin near the bottom of the tank, the surface layer of the liquid resin is irradiated. In accordance with this second known technique, the work surface on which the object is formed faces upwards and the modelling head is, therefore, gradually lowered into the vat.

At the end of the process, regardless of the type of machine used, the finished object needs to be detached from the work surface of the modelling head.

Generally, the detachment of the object is performed manually, through the use of cutting tools that are slid onto the work surface.

Disadvantageously, this operation is complex and time consuming, since it must be performed with extreme care, to prevent breaking or damaging the object just produced.

To overcome this drawback, document EP 2523801 shows a three-dimensional printing machine, more precisely, a stereolithographic machine, comprising a modelling head equipped with a work surface in which multiple grooves have been made. At the end of the process, in each of the aforementioned grooves, it is possible to insert and slide an elongated element belonging to a cleaning tool. The elongated element exerts a thrust on the three-dimensional object to cause its detachment from the work surface. Therefore, the aforementioned grooves allow the detachment of the finished object from the work surface to be facilitated. In particular, the aforementioned grooves are deeper than the thickness of the layers that compose the three-dimensional object, to prevent the grooves themselves becoming obstructed by the solidification of the first layers of the object due to processing requirements or positioning defects.

The main drawback of the modelling head shown in document EP 2523801 is that it still requires manual intervention by a specialist operator, with the consequent risk of damaging the object just formed. Furthermore, disadvantageously, it is necessary for the operator to be equipped with a specific tool, having the suitable dimensions and shape to make it insertable into the grooves made in the work surface.

Another drawback of the modelling head according to EP2523801 is that it is complicated to construct, since it requires finding a compromise on the number of grooves to be made. In fact, on one hand, a high number of grooves facilitates the detachment of the object but, on the other hand, worsens the grip of the object to the work surface. Therefore, disadvantageously, it is necessary to calibrate the number of grooves according to the type of object to be produced.

Disadvantageously, the realisation of the tool also implies some complications. First of all, the tool must be made to measure, i.e. according to the number, depth and mutual distance between the grooves. Furthermore, the tool must be made of material that is sufficiently flexible to allow the application of a gradual force on the object, but at the same time must be sufficiently stiff to guarantee the detachment of the object from the modelling head US2005/275129 discloses an apparatus for additive manufacturing comprising a platform with openings and a punch with projections adapted to engage the openings.

In this context, the technical task underlying the present invention is to propose a modelling head for a three-dimensional printing machine, which obviates the drawbacks of the known art as mentioned above. In particular, an object of the present invention is to provide a modelling head that is able to allow the detachment of the object quickly and without the use of tools.

Another object of the present invention is to realise a modelling head that allows the detachment of the object safely, i.e. without damaging or ruining the object just formed.

Another object of the present invention is to provide a modelling head that allows the detachment of the object also by non-specialist operators, preferably also automatically.

Another object of the present invention is to provide a modelling head able to guarantee the correct positioning and correct formation of the object. In particular, it is an object of the present invention to provide a modelling head that allows both optimal grip of the object during the process and easy detachment thereof at the end of the process.

The defined technical task and the specified aims are substantially achieved by a modelling head for a three-dimensional printing machine, which head comprises the technical characteristics set out in one or more of the appended claims. The dependent claims correspond to further embodiments of a modelling head, according to the present invention.

Further characteristics and advantages of the present invention will become more apparent from the following indicative, and hence non-limiting, description of a preferred, but not exclusive, embodiment of a modelling head for a three-dimensional printing machine, as illustrated in the appended drawings, in which:
- figure 1 illustrates a perspective view of a three-dimensional printing machine that comprises a modelling head in accordance with the invention;
- figure 2 illustrates a perspective view of a modelling head according to the invention;
- figure 3 illustrates a lateral view of the modelling head shown in figure 2, in a first operating configuration;
- figure 4 illustrates a lateral view of the modelling head shown in figure 2, in a second operating configuration;
- figure 5 illustrates an exploded view of the modelling head shown in figure 2;
- figure 6 illustrates a lateral sectional view, and with some parts removed to better highlight others, of the modelling head shown in figure 3, in said first operating configuration;
- figure 7 illustrates a lateral sectional view, and with some parts removed to better highlight others, of the modelling head shown in figure 4, in said second operating configuration.

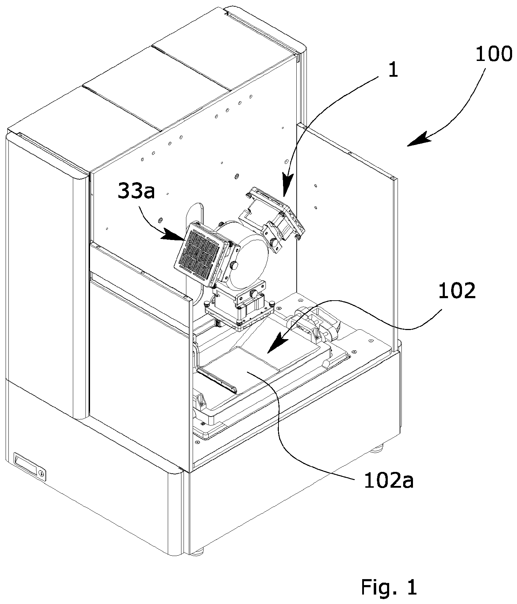

Figure 1 illustrates a three-dimensional printing machine 100 comprising a modelling head indicated overall by number 1.

The three-dimensional printing machine 100, illustrated purely by way of non-limiting example, comprises a vat 102 for containing liquid resin and is provided with at least one modelling head 1, preferably with three heads. The liquid resin, of the known type, is able to solidify under the action of radiation emitted by a light source (not shown) positioned below the vat 102, the bottom 102a of which is appropriately transparent to the radiation emitted by the light source.

In the operating conditions of the machine, each modelling head 1 is, in turn, positioned at a distance, from the bottom 102a of the vat 102, equal to the thickness of the layer to be solidified. Subsequently, the light source selectively irradiates the layer of liquid resin adjacent to the bottom 102a of the vat 102, so that said layer is solidified. In more detail, the modelling head 1 is configured so that the solidified layer adheres to it while, on the contrary, the bottom 102a of the vat 102 has a coating that reduces such adhesion. Preferably, the bottom 102a is made, or coated, with silicone material. Each modelling head 1 is then moved away from the bottom 102a of the vat 102, so as to make the solidified layer emerge and thus allow the necessary thickness of the liquid resin to be restored for the processing of a subsequent layer. Following this, each modelling head 1, during its processing turn, brings the object back into a position such that the last solidified layer is at a distance, from the bottom 102a of the vat 102, equal to the thickness of the new layer to be solidified, so that the new layer solidifies adherent to the previous layer. During processing, therefore, the modelling head 1 is gradually raised and moved away from the vat 102. Without reducing the generality of the invention, the three-dimensional printing machine which incorporates a modelling head according to the invention could even be of the type in which the processing head is gradually lowered into the vat.

In accordance with the invention, the modelling head 1 comprises a first 2 and a second 3 base body each having a respective work surface 2a, 3a. In particular, as will become clearer in the following description, an object being formed inside the machine adheres to at least one of the work surfaces of the base bodies. Preferably, an object being formed adheres alternatively to one of said work surfaces.

With reference to the figures, the first base body 2 comprises a base wall.

The head 1 comprises a plurality of inserts.

For clarity purposes, the numerical references 2 and 3 shall also refer hereinafter to the base wall and to the aforementioned inserts, respectively.

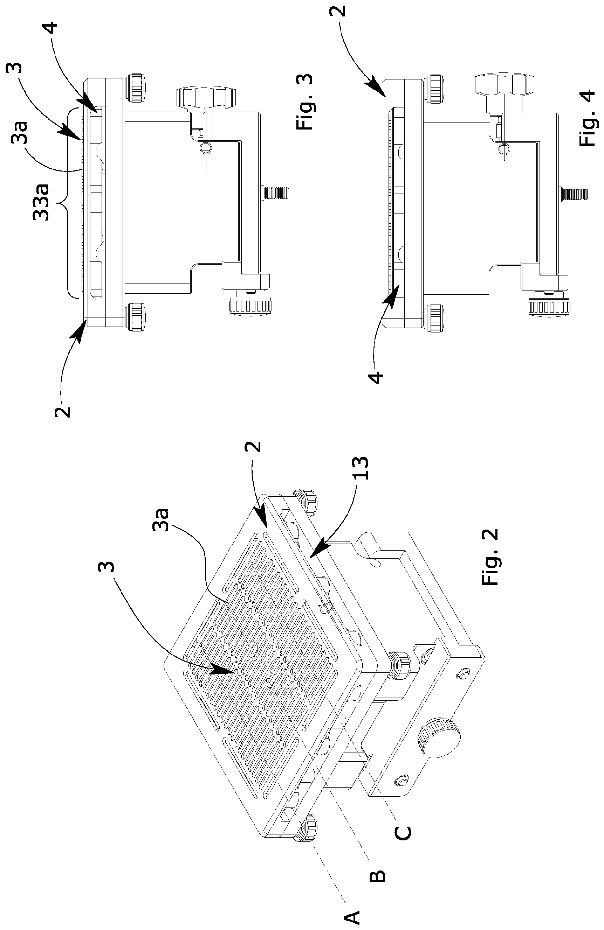

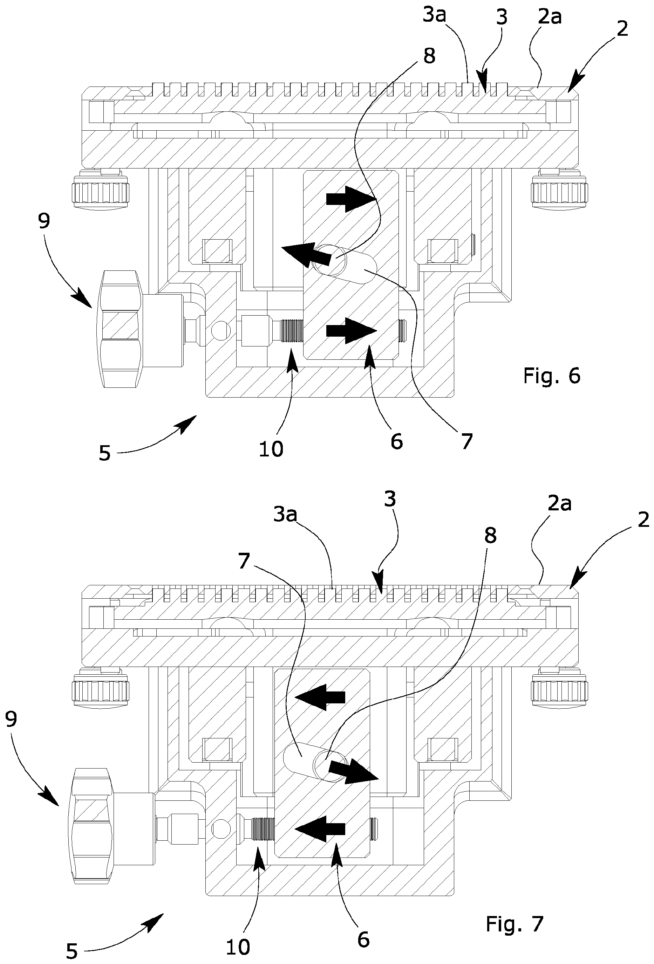

With particular reference to figures 2, 3 and 5 the modelling head 1 comprises a base wall 2 and a plurality of inserts 3 each provided with a work surface 3a and arranged in a projecting position from the base wall 2. In particular, the inserts 3 are operatively associated with one another so that the respective work surfaces 3a define an overall work surface 33a (figures 1 and 3) onto which an object being processed inside the machine 100 adheres. In accordance with the invention, the inserts are movable between an extracted operating configuration (figures 3 and 6) in which, during the object forming step, they assume the aforementioned projecting position from the base wall 2, and a retracted operating configuration (figures 4 and 7) in which, at the end of the object forming step, they assume a recessing position into the base wall 2. In this way, after the inserts 3 have been moved between the extracted and the retracted configuration, the formed object comes into contact with the base wall 2 and receives a thrust such that it becomes detached from the overall work surface 33a. In other words, the base wall 2 acts as an end stop, defining an abutment and detachment element for the object that moves following the retraction movement of the inserts.

Therefore, advantageously, a modelling head according to the invention allows the object to be detached from the work surface without using tools.

Preferably, in the extracted position, the inserts 3 project to a height comprised between about 0.5 mm and about 1.5 mm with respect to the base wall 2.

According to a further aspect of the invention (figures 3, 4 and 5), the inserts are solidly fixed to a plate 4 that is movable with respect to the base wall 2. Preferably, according to a further aspect of the invention, the inserts are made in a single piece with the plate 4 and are protrusions thereof which extend according to predefined extension directions.

The head 1 may comprise a movement means for moving the base bodies 2, 3.

In particular, according to a variant of the embodiment shown in figures 6 and 7, the modelling head 1 comprises a movement means 5 for moving the plate 4 that supports the inserts 3.

According to an aspect of the invention, the movement means 5 comprises a slider 6 having a guide 7 within which a pin 8 solidly constrained to the plate 4 is engaged and slides. In particular, the slider 6 is movable in relation to the plate 4, so that the guide 7 can drag the pin 8 and activate a movement of the plate 4 solidly constrained to the pin itself. In more detail, the guide 7 is inclined with respect to the horizontal direction and therefore the translation movement of the slider 6 determines a movement of the pin 8 according to an inclined trajectory. In particular, the pin 8 moves with an alternative motion between at least a first operating condition (figure 6) corresponding to the extracted configuration of the inserts (figure 3) and at least a second operating condition (figure 7) corresponding to the retracted configuration of the inserts (figure 4). Preferably, the guide 7 is defined by a slot made on the slider 6.

In addition, the movement means 5 comprises control members for activating the movement of the slider 6. According to an aspect of the invention, the control members comprise a knob 9 solidly constrained to a threaded element 10, preferably a worm screw, engaged in a corresponding threaded seat made on the slider 6. Following a rotation of the knob in a first rotation direction, the threaded element rotates so that the slider 6 reaches a first end stop position corresponding to the extracted position of the inserts (figure 6). Vice versa, following a rotation of the knob in an opposite rotation direction, the threaded element 10 rotates so that the slider 6 reaches a second end stop position corresponding to the retracted position of the inserts (figure 7).

According to a further aspect of the invention (not shown), the control members comprise an electric motor operatively active on the cam. According to such variant of the embodiment, the aforementioned spindle onto which the slider is engaged coincides with the electric motor shaft. In particular, the electric motor is of the brushless type and its activation is controlled by an electronic processing unit, preferably integrated thereto.

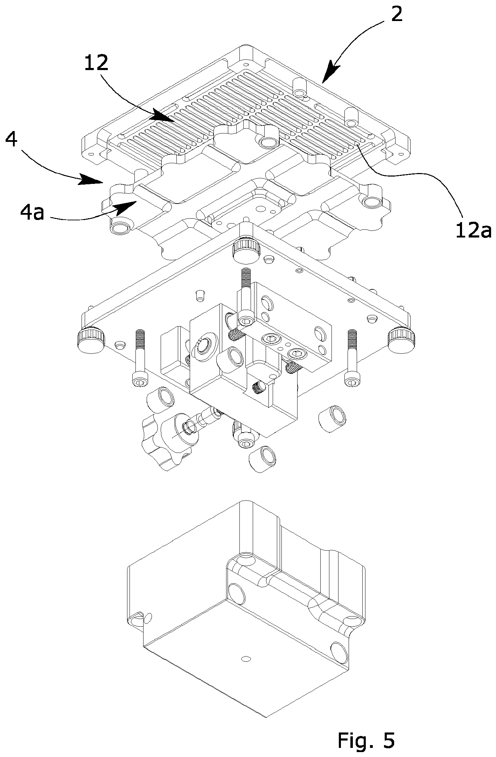

According to a further aspect of the invention (figure 5), the base wall 2 comprises a grille 12 having a plurality of access openings 12a to a housing compartment 13 (figures 2 and 6). In particular, the inserts are inserted slidably into the aforementioned access openings 12a to enter and exit from said housing compartment 13, so as to assume, respectively, the aforementioned extracted and retracted operating configurations. Preferably, each access opening 12a has an edge countershaped to a cross section of a respective insert. Advantageously, such circumstance allows infiltrations of liquid resin into the housing compartment 13 to be reduced to a minimum.

According to a further aspect of the invention, the work surface of each insert is substantially oblong shaped. Preferably, the work surface of each insert is also substantially flat.

In accordance with a further aspect of the invention (figure 2), the modelling head 1 comprises a plurality of series of inserts (marked by lines A, B, C in figure 1) organised according to parallel lines.

The operation of the invention is a direct consequence of the structural elements described above and is therefore as follows.

Before starting the object forming step, the inserts 3 are controlled so as to assume the aforementioned extracted configuration, thus being arranged in a projecting position with respect to the base wall 2. In this way, the individual work surfaces 3a of the inserts 3 cooperate to define as a whole an overall work surface 33a onto which the object to be formed inside the machine adheres.

At the end of the process, after the object is completely formed and still adhering to the overall work surface 33a, the inserts 3 are controlled so as to assume the aforementioned retracted configuration, thus being arranged in a recessing position within the base wall 2. In this way, due to the effect of the movement of the inserts 3 between the extracted position and the retracted position, the formed object comes into contact with the base wall 2, which exerts a force such that the object becomes detached from the individual work surfaces 3a and therefore also from the overall work surface. In other words, the circumstance by which each insert 3 is recessed into the base wall 2, for example by becoming housed in the compartment 13, necessarily implies that the object - still adhering to the inserts - is driven in abutment against the base wall 2, which acts as an end stop for the formed object, stopping it and hence causing its separation from the inserts, which instead continue their stroke until they are recessed into the base wall 2. Therefore, advantageously, the detachment of the object from the processing head takes place safely, without the use of tools which could compromise the integrity of the object just produced.

Another advantage of the present invention is that it allows the detachment of the object even by non-specialist operators. In fact, at the end of the process, the operator simply has to activate the movement means 5 of the plate 4 that supports the inserts 3, so that the inserts are moved to become recessed into the base wall 2, i.e. in this way the inserts assume the aforementioned retracted configuration. Even more advantageously, in the case in which the movement means 5 comprises an electric motor, the detachment of the object takes place completely automatically, without the intervention of an operator.

Advantageously, a modelling head according to the invention allows both optimal grip of the object during the process and easy detachment thereof at the end of the process. In fact, given the effectiveness of the base wall 2 to act as an end stop and detach the object, the work surface of the head can by conveniently optimised to promote the grip of the object during the forming step.

## Claims

1. A modelling head (1) for a three-dimensional printing machine (100), comprising:
- a first body provided with a base wall (2) having a work surface (2a);
**characterized in that** said modelling head comprises :
- at least a second body comprising a plurality of inserts (3) each provided with a work surface (3a) and arranged in a projecting position from said base wall (2), said inserts (3) being operatively associated with one another so that the respective work surfaces (3a) define an overall work surface (33a) onto which an object being processed inside the machine (100) adheres, said inserts (3) being movable between an extracted operating configuration in which, during the object forming step, they assume the aforementioned projecting position from the base wall (2), and a retracted operating configuration in which, at the end of the object forming step, they assume a recessing position into said base wall (2), therefore during the movement of the inserts (3) between said operating configurations, the formed object comes into contact with the work surface of the base wall (2) and receives a thrust so that it becomes detached from the overall work surface (33a).

2. The head (1) according to any one of the preceding claims, wherein said inserts (3) are movable along an orthogonal direction to the work surfaces (2a, 3a) of the base wall (2) and of the inserts (3) themselves.

3. The head (1) according to claim 1, wherein said inserts (3) are solidly fixed to a plate (4) that is movable with respect to the base wall (2).

4. The head (1) according to claim 3, wherein said inserts are made in a single piece with the plate (4) and are protrusions thereof which extend according to predefined extension directions.

5. The head (1) according to any one of the preceding claims, wherein movement means (5) are provided for moving said base bodies (2, 3).

6. The head (1) according to claim 5, when dependant on claim 3, comprising a slider (6) having a guide (7) within which a pin (8) slides solidly constrained to the plate (4), said slider (6) being movable in relation to the plate (4), so that the guide (7) drags the pin (8) and activates a movement of the plate (4).

7. The head (1) according to claim 6, wherein said guide (7) is inclined with respect to a horizontal direction, the movement of the slider (6) determining a movement of the pin (8) according to an inclined trajectory.

8. The head (1) according to claims 6 or 7, wherein the slider (6) is movable in alternate motion between at least a first operating condition corresponding to the extracted configuration of the inserts and at least a second operating condition corresponding to the retracted configuration of the inserts.

9. The head (1) according to any one of claims 6 to 8, comprising control members for activating the movement of the slider (6).

10. The head (1) according to claim 9, wherein the control members comprise a knob (9) solidly constrained to a threaded element (10) engaged in a corresponding threaded seat made on the slider (6), said threaded element, following a rotation of the knob in a first rotation direction, rotating so that the slider (6) reaches a first end stop position corresponding to the extracted position of the inserts; said threaded element, following a rotation of the knob in an opposite rotation direction, rotating so that the slider (6) reaches a second end stop position corresponding to the retracted position of the inserts.

11. The head (1) according to claim 1, wherein the base wall (2) comprises a grille (12) having a plurality of openings (12a) for accessing a housing compartment (13), said inserts (3) being inserted slidably into said access openings (12a) for entering and exiting from said housing compartment (13).

12. The head (1) according to claim 11, wherein each access opening (12a) has a countershaped edge to a cross section of a respective insert (3).

13. The head according claim 1, comprising a plurality of series of inserts (3) organised according to parallel lines (A, B, C).

14. A three-dimensional printing machine (100), comprising a modelling head (1) according to any one of the preceding claims.

## Patentansprüche

1. Modellierungskopf (1) für eine Maschine zum dreidimensionalen Drucken (100), umfassend:
- einen ersten Körper, der mit einer Basiswand (2) versehen ist, aufweisend eine Arbeitsoberfläche (2a),
**dadurch gekennzeichnet, dass** der Modellierungskopf umfasst:
- mindestens einen zweiten Körper, umfassend eine Vielzahl an Einsätzen (3), von denen ein jeder mit einer Arbeitsoberfläche (3a) versehen und in einer aus der Basiswand (2) hervorstehenden Position angeordnet ist, wobei die Einsätze (3) betriebswirksam miteinander assoziiert sind, sodass die jeweiligen Arbeitsoberflächen (3a) eine Gesamtarbeitsoberfläche (33a) definieren, auf der ein Gegenstand, der in der Maschine (100) verarbeitet ist, haftet, wobei die Einsätze (3) zwischen einer ausgefahrenen Betriebskonfiguration, in der sie während des Schritts zum Formen des Gegenstands die oben genannte aus der Basiswand (2) hervorstehende Position einnehmen, und einer eingefahrenen Betriebskonfiguration bewegbar sind, in der sie am Ende des Schritts zum Formen des Gegenstands eine in die Basiswand (2) zurücktretende Position einnehmen, wodurch der geformte Gegenstand während der Bewegung der Einsätze (3) zwischen den Betriebskonfigurationen mit der Arbeitsoberfläche der Basiswand (2) in Kontakt kommt und einen Schub bekommt, sodass er von der Gesamtarbeitsoberfläche (33a) gelöst wird.

2. Kopf (1) nach einem der vorhergehenden Ansprüche, wobei die Einsätze (3) entlang einer rechtwinkeligen Richtung zu den Arbeitsoberflächen (2a, 3a) der Basiswand (2) und der Einsätze (3) selbst bewegbar sind.

3. Kopf (1) nach Anspruch 1, wobei die Einsätze (3) fest an einer Platte (4) fixiert sind, die zur Basiswand (2) bewegbar ist.

4. Kopf (1) nach Anspruch 3, wobei die Einsätze aus einem einzigen Stück mit der Platte (4) gefertigt sind und Vorsprünge von dieser sind, die sich nach vorgegebenen Ausdehnungsrichtungen erstrecken.

5. Kopf (1) nach einem der vorhergehenden Ansprüche, wobei Bewegungsmittel (5) für die Bewegung der Basiskörper (2, 3) bereitgestellt sind.

6. Kopf (1) nach Anspruch 5, wenn abhängig von Anspruch 3, umfassend einen Schieber (6), aufweisend eine Führung (7), in der ein Zapfen (8) fest verbunden mit der Platte (4) verschoben wird, wobei der Schieber (6) zur Platte (4) bewegbar ist, sodass die Führung (7) den Zapfen (8) zieht und eine Bewegung der Platte (4) aktiviert.

7. Kopf (1) nach Anspruch 6, wobei die Führung (7) zu einer horizontalen Richtung geneigt ist, wobei die Richtung des Schiebers (6) eine Bewegung des Zapfens (8) nach einer geneigten Bahn bestimmt.

8. Kopf (1) nach Anspruch 6 oder 7, wobei der Schieber (6) im Pendelbetrieb zwischen mindestens einem ersten Betriebszustand entsprechend der ausgefahrenen Konfiguration der Einsätze und mindestens einem zweiten Betriebszustand entsprechend der eingefahrenen Konfiguration der Einsätze bewegbar ist.

9. Kopf (1) nach einem der Ansprüche 6 bis 8, umfassend Bedienelemente zur Aktivierung der Bewegung des Schiebers (6).

10. Kopf (1) nach Anspruch 9, wobei die Bedienelemente einen Knopf (9) umfassen, der fest mit einem Gewindeelement (10) verbunden ist, das im Eingriff in einer entsprechenden Gewindeaufnahme ist, die auf dem Schieber (6) ausgebildet ist, wobei das Gewindeelement einer Drehung des Kopfs in einer ersten Rotationsrichtung folgt und sich so dreht, dass der Schieber (6) eine erste Endstoppposition erreicht, entsprechend der ausgefahrenen Position der Einsätze, wobei das Gewindeelement einer Drehung des Knopfs in eine entgegengesetzte Rotationsrichtung folgt und sich so dreht, dass der Schieber (6) eine zweite Endstoppposition erreicht, entsprechend der eingefahrenen Position der Einsätze.

11. Kopf (1) nach Anspruch 1, wobei die Basiswand (2) ein Gitter (12) umfasst, aufweisend eine Vielzahl an Öffnungen (12a) für den Zugriff auf ein Gehäuseabteil (13), wobei die Einsätze (3) verschiebbar in diese Zugriffsöffnungen (12a) eingesetzt werden, um in das Gehäuseabteil (13) einzutreten und aus diesem auszutreten.

12. Kopf (1) nach Anspruch 11, wobei eine jede Zugriffsöffnung (12a) eine Kante aufweist, die gegenüber einem Querschnitt eines jeweiligen Einsatzes (3) gegengeformt ist.

13. Kopf nach Anspruch 1, umfassend eine Vielzahl einer Reihe von Einsätzen (3), die nach parallelen Linien (A, B, C) organisiert sind.

14. Maschine zum dreidimensionalen Drucken (100), umfassend einen Modellierungskopf (1) nach einem der vorhergehenden Ansprüche.

## Revendications

1. Tête de modelage (1) pour une machine d'impression (100) en trois dimensions, comprenant :
- un premier corps pourvu d'une cloison de base (2) comportant une surface de travail (2a) ;
**caractérisée en ce que** ladite tête de modelage comprend :
- au moins un second corps comprenant une pluralité d'inserts (3) pourvus d'une surface de travail (3a) et disposés dans une position en saillie à partir de ladite cloison de base (2), lesdits inserts (3) étant fonctionnellement associés les uns aux autres de sorte que les surfaces de travail (3a) respectives définissent une surface de travail (33a) globale sur laquelle adhère un objet étant traité à l'intérieur de la machine (100), lesdits inserts (3) étant mobiles entre une configuration de fonctionnement extraite dans laquelle, pendant l'étape de formation de l'objet, ceux-ci adoptent la position en saillie susmentionnée à partir de la cloison de base (2), et une configuration de fonctionnement rétractée dans laquelle, au terme de l'étape de formation de l'objet, ceux-ci adoptent une position de renfoncement dans ladite cloison de base (2), par conséquent lors du déplacement des inserts (3) entre lesdites configurations de fonctionnement, l'objet formé vient se mettre en contact avec la surface de travail de la cloison de base (2) et reçoit une poussée de sorte qu'il finit par se détacher de la surface de travail (33a) globale.

2. Tête (1) selon l'une quelconque des revendications précédentes, dans laquelle lesdits inserts (3) sont mobiles le long d'une direction orthogonale aux surfaces de travail (2a, 3a) de la cloison de base (2) et des inserts (3) eux-mêmes.

3. Tête (1) selon la revendication 1, dans laquelle lesdits inserts (3) sont fermement fixés à une plaque (4) étant mobile par rapport à la cloison de base (2).

4. Tête (1) selon la revendication 3, dans laquelle lesdits inserts forment un seul tenant avec la plaque (4) et sont des protubérances de celle-ci se prolongeant selon des directions d'extension prédéfinies.

5. Tête (1) selon l'une quelconque des revendications précédentes, dans laquelle des moyens de déplacement (5) sont pourvus pour déplacer lesdits corps de base (2, 3).

6. Tête (1) selon la revendication 5, lorsqu'elle dépend de la revendication 3, comprenant un coulisseau (6) comportant un guide (7) à l'intérieur duquel une cheville (8) coulisse de façon solidaire avec la plaque (4), ledit coulisseau (6) étant mobile par rapport à la plaque (4) de sorte que le guide (7) tire la cheville (8) et active un mouvement de la plaque (4).

7. Tête (1) selon la revendication 6, dans laquelle ledit guide (7) est incliné par rapport à une direction horizontale, le déplacement du coulisseau (6) déterminant un mouvement de la cheville (8) selon une trajectoire inclinée.

8. Tête (1) selon la revendication 6 ou 7, dans laquelle le coulisseau (6) est mobile selon un mouvement alternatif entre au moins une première condition de fonctionnement correspondant à la configuration extraite des inserts et au moins une seconde condition de fonctionnement correspondant à la configuration rétractée des inserts.

9. Tête (1) selon l'une quelconque des revendications de 6 à 8, comprenant des organes de commande pour activer le déplacement du coulisseau (6).

10. Tête (1) selon la revendication 9, dans laquelle les organes de commande comprennent un bouton (9) solidaire d'un élément fileté (10) mis en prise avec un siège fileté correspondant réalisé sur le coulisseau (6), ledit élément fileté, suivant une rotation du bouton dans une première direction de rotation, tournant de sorte que le coulisseau (6) atteint une première position d'arrêt terminale correspondant à la position extraite des inserts ; ledit élément fileté, suivant une rotation du bouton dans une direction de rotation opposée, tournant de sorte que le coulisseau (6) atteigne une seconde position d'arrêt terminale correspondant à la position rétractée des inserts.

11. Tête (1) selon la revendication 1, dans laquelle la cloison de base (2) comprend une grille (12) comportant une pluralité d'ouvertures (12a) pour accéder à un compartiment de logement (13), lesdits inserts (3) étant introduits de façon coulissante dans lesdites ouvertures d'accès (12a) pour entrer et sortir dudit compartiment de logement (13).

12. Tête (1) selon la revendication 11, dans laquelle chaque ouverture d'accès (12a) comporte un bord contrefaçonné à une section transversale d'un insert (3) respectif.

13. Tête selon la revendication 1, comprenant une pluralité de séries d'inserts (3) organisées selon des lignes parallèles (A, B, C).

14. Machine d'impression (100) en trois dimensions comprenant une tête de modelage (1) selon l'une quelconque des revendications précédentes.
